(19) Europäisches Patentamt
European Patent Office
Office européen des brevets

(11) Veröffentlichungsnummer : **0 088 265**
**B1**

(12) # EUROPÄISCHE PATENTSCHRIFT

(45) Veröffentlichungstag der Patentschrift : **24.04.85**

(51) Int. Cl.$^4$ : **C 01 B 25/40**

(21) Anmeldenummer : **83101593.8**

(22) Anmeldetag : **19.02.83**

(54) **Kettenförmige, im wesentlichen wasserunlösliche Ammoniumpolyphosphate und Verfahren zu ihrer Herstellung.**

(30) Priorität : **06.03.82 DE 3208202**

(43) Veröffentlichungstag der Anmeldung : **14.09.83 Patentblatt 83/37**

(45) Bekanntmachung des Hinweises auf die Patenterteilung : **24.04.85 Patentblatt 85/17**

(84) Benannte Vertragsstaaten : **AT BE CH DE FR GB IT LI NL SE**

(56) Entgegenhaltungen :
**DE-B- 1 767 205**
**FR-A- 1 471 510**
**US-A- 3 978 195**

(73) Patentinhaber : **HOECHST AKTIENGESELLSCHAFT**
**Postfach 80 03 20**
**D-6230 Frankfurt am Main 80 (DE)**

(72) Erfinder : **Schrödter, Klaus, Dr.**
**Baadenberger Strasse 18**
**D-5000 Köln 30 (DE)**
Erfinder : **Maurer, Alexander, Dr.**
**Am grünen Weg 7**
**D-5030 Hürth (DE)**

**EP 0 088 265 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von kettenförmigen, im wesentlichen wasserunlöslichen Ammonium-polyphosphaten der allgemeinen Formel $(NH_4PO_3)_{10-1\,000}$ durch Erhitzen und ständiges Durchmischen von Phosphorpentoxid und Ammoniumorthophosphat im Molverhältnis 1 : 0,9 bis 1 : 1,1 in Gegenwart von Ammoniak und anschließendes mehrstündiges Tempern des Reaktionsprodukts bei 200-400 °C in Gegenwart von Ammoniak. Die Viskosität einer Suspension des erhaltenen Ammoniumpolyphosphats in Wasser oder einem Polyesterpolyol soll möglichst gering sein.

Ammoniumpolyphosphat — im folgenden kurz APP genannt — wird seit einiger Zeit großtechnisch hergestellt und vor allem zur Flammschutzausrüstung fon Kunststoffen und Anstrichsystemen eingesetzt, erfüllt jedoch die Anforderungen der Verbraucher, besonders hinsichtlich der Verarbeitbarkeit, nur unvollkommen. Je nach Anwendungszweck sollen wäßrige oder organische Suspensionen von APP eine möglichst geringe Viskosität besitzen, damit sie in den erforderlichen Konzentrationen überhaupt verarbeitet werden können. Zur Erzielung definierter Flammschutzeigenschaften sind nämlich bestimmte APP-Gehalte erforderlich, deren Reduzierung die Flammschutzeigenschaften deutlich verschlechtern würde.

Außerdem soll das APP eine möglichst geringe Löslichkeit in Wasser besitzen, um ein Auswaschen aus dem jeweiligen System zu erschweren, wodurch die Dauerhaftigkeit des Flammschutzes erhöht wird.

Aus den dargelegten Gründen stellt sich die Aufgabe, ein APP von geringer Löslichkeit in Wasser und geringer Viskosität seiner wäßrigen und organischen Suspensionen herzustellen.

Die DE-C-2 330 174 beschreibt bereits ein Verfahren und eine Vorrichtung zur Herstellung von im wesentlichen wasserunlöslichen, kettenförmigen Ammoniumpolyphosphaten, wobei Ammonium orthophosphat und $P_2O_5$ in einem Reaktor bei bestimmter Variation der Mischorgane mit überschüssigem Ammoniak (Beispiele 1-3 : 33 Mol.-%, Beispiel 5 : 56 Mol.-%, Beispiel 6 : 13 Mol.-% $NH_3$-Überschuß) bei 170 bis 350 °C, vorzugsweise 200-270 °C, umgesetzt wird. Mit zunehmender Reaktionstemperatur werden Produkte geringerer Wasserlöslichkeit erhalten. Über die Viskosität der APP-Suspensionen finden sich zwar keine Angaben, doch ergab die experimentelle Nachprüfung unerwünscht hohe Viskositätswerte wäßriger und organischer APP-Suspensionen (vgl. nachfolgendes Vergleichsbeispiel 4). In der DE-C-2 330 174 ist die Löslicheit einer 1 proz. APP-Aufschlämmung in Wasser bei 25 °C nur scheinbar extrem gering (0,67 bis 3,8 Gew.-%, d. h. 6,7 bis 38 mg gelöstes APP in 100 g Aufschlämmung), da diese Löslichkeiten nach einer älteren Methode unter Zusatz von Ammoniumchlorid gemessen wurden (vgl. EP-Anmeldung 81 107 108.3, Seite 4, Zeilen 15-17, und Beispiel 5).

Weiterhin beschreibt die ältere EP-Anmeldung 81 107 108.3 (= DE-Anmeldung P 30 38 836.4) ein Verfahren zur Herstellung von langkettigem Ammoniumpolyphosphat durch Umsetzung etwa äquimolarer Mengen von Ammoniumorthophosphat und $P_2O_5$ unter Zusatz von 0,1 bis 15 Mol.-% Melamin, ber. auf $P_2O_5$, bei 50-150 °C in Gegenwart von überschüssigem Ammoniak und anschließender Temperung des Reaktionsprodukts bei 200-400 °C. Der Ammoniaküberschuß errechnet sich zu 114 Mol.-%. Der Nachteil dieses Verfahrens liegt im zusätzlichen Bedarf eines Kondensationsmittels (Melamin oder dessen Kondensationsprodukte) sowie in der Anwendung eines hohen Ammoniaküberschusses ; auch ist die erzielte Löslichkeit einer 10 proz. wäßrigen Suspension mit immerhin noch 8-12 Gew.-% (= 0,8-1,2 g gelöstes APP in 100 g Suspension) nicht voll befriedigend.

Die Erfindung ist nun dadurch gekennzeichnet, daß man Phosphorpentoxid und Ammoniumorthophosphat bei 50-150 °C nacheinander

a) 5-15 min bei Überdruck von 1-2 mbar mit Ammoniak umsetzt,

b) 10-60 min ohne Ammoniakzufuhr bei Normaldruck unter Stickstoff durchmischt,

c) 1-3 Stunden bei einem Druck von 1-5 mbar unterhalb Normaldruck mit Ammoniak unsetzt

und das Reaktionsprodukt tempert, wobei Ammoniak insgesamt in einem stöchiometrischen überschuß von höchstens 20 Mol.-%, vorzugsweise höchstens 10 Mol.-%, eingesetzt wird.

Weiterhin betrifft die Erfindung nach dem beanspruchten Verfahren darstellbare kettenförmige Ammoniumpolyphosphate der allgemeinen Formel $(NH_4PO_3)_{10-1\,000}$, welche gekennzeichnet sind durch

a) die Löslichkeit einer 10 gewproz. Suspension in reinem Wasser bei 25 °C von weniger als 0,8 g je 100 g Suspension ;

b) die Viskosität einer 10 gewproz. Suspension in reinem Wasser bei 25 °C von höchstens 100 mPa · s ;

c) die Viskosität einer 30 gewproz. Suspension in Polyesterpolyol bei 25 °C von höchstens 50 Pa · s.

Die Umsetzung verläuft nach den bekannten Summengleichungen

$$(NH_4)_2HPO_4 + P_2O_5 + NH_3 \rightarrow 3/n\ (NH_4PO_3)_n$$

bzw.

$$(NH_4)H_2PO_4 + P_2O_5 + 2NH_3 \rightarrow 3/n\ (NH_4PO_3)_n.$$

Die Erfindung basiert auf der bisher nicht beschriebenen Beobachtung, daß die Umsetzung von Ammoniumorthophosphat und $P_2O_5$ mit gasförmigem Ammoniak in zwei zeitlich getrennten Reaktionsphasen abläuft. Bei Zufuhr von Ammoniak zum Feststoffgemisch bei 50-150 °C ist der Beginn der ersten Phase an einer starken $NH_3$-Aufnahme erkennbar. Nach etwa 10 min läßt der Ammoniakbedarf sprunghaft nach, womit dieser Reaktionsabschnitt abgeschlossen ist. Bei unverminderter $NH_3$-Zufuhr nimmt das Reaktionsprodukt gleichmäßig Ammoniak auf, bis nach insgesamt 1-1,5 Stunden spontan eine zweite starke $NH_3$-Aufnahme beginnt (zweite Reaktionsphase). Dabei wurde gefunden, daß nur dann ein APP mit den gewünschten Eigenschaften entsteht, wenn einerseits nach der ersten Reaktionsphase eine Vermischungszeit von 10 bis 60 min ohne $NH_3$-Zufuhr eingehalten und andererseits während der zweiten, 1-3 stündigen Reaktionsphase die $NH_3$-Zufuhr so sparsam eingestellt wird, daß im Reaktor ein Druck von 1-5 mbar unterhalb Normaldruck herrscht.

Der $NH_3$-Unterschuß in dieser Phase verhindert eine andernfalls zu heftig und rasch ablaufende Umsetzung, wobei Produkte mit unerwünschten Eigenschaften entstehen.

Das APP der Erfindung zeigt in wäßriger wie auch in organischer Suspension, z. B. in einem Polyesterpolyol, eine nur geringe Viskosität. Während z. B. für das gemäß DE-C-2 330 174 hergestellte APP in 10 proz. wäßriger Suspension Viskositätswerte von weit über 1 000 mPa · s gemessen wurden, ergeben sich für die erfindungsgemäßen Produkte Viskositätswerte von unter 100 mPa · s, vorzugsweise unter 50 mPa · s. Ein ähnliches Verhalten wird auch in organischen Lösemitteln, z. B. einem Polyesterpolyol, beobachtet. Hier wird die Viskosität auf etwa die Hälfte gegenüber einem APP gemäß DE-C-2 330 174 reduziert. Ein weiterer Vorteil des Einsatzes von gemäß der Erfindung hergestelltem APP ist seine gegenüber einem Produkt gemäß DE-C-2 330 174 deutlich verringerte Löslichkeit in reinem Wasser, welche sich auf die Flammschutzeigenschaften des Produktes günstig auswirkt, da die Möglichkeit des Auswaschens aus dem System vermindert und damit die Stabilität des Flammschutzsystems verbessert wird.

Der in einer 1 gew. proz. wäßrigen APP-Suspension gemessene pH-Wert sollte aus anwendungstechnischen Gründen bei 6 liegen, was gemäß der Erfindung der Fall ist.

Auch in wirtschaftlicher Hinsicht ist das Verfahren der Erfindung dem der DE-PS-2 330 174 und der EP-Anmeldung 81 107 108.3 überlegen, da die Hauptreaktion in der zweiten, zeitlichen ausgedehnteren Phase ohne überschüssigen Einsatz von Ammoniak abläuft, wodurch der gesamte $NH_3$-Verbrauch deutlich reduziert wird.

## Beispiel 1

In einem mit rotierenden Misch- und Knetorganen ausgestatteten Reaktor von 1 $m^3$ Inhalt wurden 360 kg $P_2O_5$ (2,54 kmol) und 335 kg $(NH_4)_2HPO_4$ (2,54 kmol) eingetragen. Nach dem Aufheizen auf 100 °C wurde Amoniak zugeführt, wobei eine Regelautomatik im Reaktor einen Überdruck von 1-2 mbar aufrechterhielt. Unter Aufnahme von 19 $m^3$ $NH_3$ war die erste Reaktionsphase nach 15 min beendet. Anschließend wurde das Reaktionsgemisch 45 min ohne Zufuhr von Ammoniak unter Stickstoff-Atmosphäre gerührt. Während der daran anschließenden 2. Reaktionsphase 2 Stunden Dauer wurden bei einem Druck von 1-3 mbar unterhalb Normaldruck 25 $m^3$ $NH_3$ eingeleitet. Daran schloß die Temperungsphase von 2 Stunden Dauer bei 230 °C unter Verbrauch von 18 $m^3$ $NH_3$ bei Normaldruck an. Der Gesamtverbrauch an Ammoniak betrug somit 62 $m^3$ (gemessen bei 0 °C und 1,013 bar), was einem stöchiometrischen Überschuß von 8,77 Mol.-% entspricht. Man erhielt ein APP, dessen Eigenschaften in der Tabelle im Anschluß an die Beispiele aufgeführt sind.

## Beispiel 2 (Vergleichsbeispiel)

Man arbeitete wie in Beispiel 1, jedoch mit dem Unterschied, daß in der 2. Reaktionsphase 42 $m^3$ $NH_3$ unter einem Überdruck von bis zu 1 mbar zugeführt wurden. Nach dem Tempern erhielt man ein APP von höherer Wasserlöslichkeit und ungünstigerem Viskositätsverhalten in wäßriger und organischer Suspension. Der Gesamtverbrauch an $NH_3$ betrug 81 $m^3$ (gemessen bei 0 °C und 1,013 bar), was einem stöchimetrischen Überschuß von 42,1 Mol.-% entspricht.

## Beispiel 3 (Vergleichsbeispiel)

Man arbeitete wie in Beispiel 1, jedoch ohne 45 minütiges Rühren des Reaktionsgemischs unter Stickstoff-Atmosphäre zwischen den beiden Reaktionsphasen. Auch hierbei wurde ein qualitativ schlechteres APP erhalten.

## Beispiel 4 (Vergleichsbeispiel in Anlehnung an DE-C-2 330 174, Beispiel 1)

In einem mit rotierenden Misch- und Knetorganen ausgestatteten Reaktor von 1 $m^3$ Inhalt wurden 360 kg $P_2O_5$ (2,54 kmol) und 335 kg $(NH_4)_2HPO_4$ (2,54 kmol) eingetragen. Bei 265 °C wurden während 1 Stunde 50,5 $m^3$ $NH_3$ und anschließen während 2 Stunden 25,25 $m^3$ $NH_3$ in den Reaktor eingeleitet. Nach insgesamt 3 Stunden wurde ein kristallines APP abgezogen, dessen Eigenschaften nicht befriedigten. Die insgesamt aufgewendete $NH_3$-Menge von 75,75 $m^3$ (gemessen bei 0 °C und 1,013 bar) entsprach einem stöchiometrischen Überschuß von 33 Mol.-%.

Tabelle

| APP gemäß Beispiel: | 1 | 2 | 3 | 4 |
|---|---|---|---|---|
| pH-Wert in 1-gew.proz. wässriger Suspension | 6,1 | 5,5 | 5,8 | 5,6 |
| Löslichkeit bei 25°C in 10-gew.proz. wässriger Suspension | | | | |
| a) in % des suspendierten APP | 5 | 17 | 14 | 23 |
| b) in g je 100 g Suspension | 0,5 | 1,7 | 1,4 | 2,3 |
| Viskosität einer 10-gew.proz. wässrigen Suspension (mPa·s) bei 25°C | 37 | 380 | 180 | 1860 |
| Viskosität einer 30-gew.proz. Suspension in Adipinsäurediäthylenglykolpolyester (Pa·s) bei 25°C | 39 | 53 | 50 | 74 |

## Patentansprüche

1. Verfahren zur Herstellung von kettenförmigen, im wesentlichen wasserunlöslichen Ammoniumpolyphosphaten der allgemeinen Formel $(NH_4PO_3)_{10\text{-}1\,000}$ durch Erhitzen und ständiges Durchmischen von Phosphorpentoxid und Ammoniumorthophosphat im Molverhältnis 1 : 0,9 bis 1 : 1,1 in Gegenwart von Ammoniak und anschließendes mehrstündiges Tempern des Reaktionsprodukts bei 200-400 °C in Gegenwart von Ammoniak, dadurch gekennzeichnet, daß man Phosphorpentoxid und Ammoniumorthophosphat bei 50-150 °C nacheinander

a) 5-15 min bei einem Überdruck von 1-2 mbar mit Ammoniak umsetzt,

b) 10-60 min ohne Ammoniakzufuhr bei Normaldruck unter Stickstoff durchmischt,

c) 1-3 Stunden bei einem Druck von 1-5 mbar unterhalb Normaldruck mit Ammoniak umsetzt und das Reaktionsprodukt tempert, wobei Ammoniak insgesamt in einem stöchiometrischen Überschuß von höchstens 20 Mol.-%, vorzugsweise höchstens 10 Mol.-%, eingesetzt wird.

2. Kettenförmige Ammoniumpolyphosphate der allgemeinen Formel $(NH_4PO_3)_{10\text{-}1\,000}$, gekennzeichnet durch

a) die Löslichkeit einer 10 gewichtsprozentigen Suspension in reinem Wasser bei 25 °C von weniger als 0,8 g je 100 g Suspension ;

b) die Viskosität einer 10 gewichtsprozentigen Suspension in reinem Wasser bei 25 °C von höchstens 100 mPa · s ;

c) die Viskosität einer 30 gewichtsprozentigen Suspension in Polyesterpolyol bei 25 °C von höchstens 50 Pa · s ; und

d) die Darstellbarkeit nach Anspruch 1.

## Claims

1. Process for making linear, substantially water-insoluble ammonium polyphosphates of the general formula $(NH_4PO_3)_{10\text{-}1,000}$ by heating and continuously mixing phosphorus pentoxide and ammonium orthophosphate in a molar ratio of 1 : 0.9 to 1 : 1.1 in the presence of ammonia and tempering the resulting reaction product over a period of several hours at 200 to 400 °C in the presence of ammonia, characterized in that the phosphorus pentoxide ammonium orthophosphate are subjected at 50 to 150 °C to the following successive operations comprising :

a) reacting them with ammonia over a period of 5 to 15 minutes under an overpressure of 1-2 mbar,

b) mixing them under nitrogen for 10 to 60 minutes at atmospheric pressure without supply of ammonia,

c) reacting them with ammonia over a period of 1 to 3 hours under a pressure by 1 to 5 mbar lower than atmospheric pressure,

and the reaction product is tempered, the ammonia being used in an overall stoichiometric excess of at most 20 mol.-%, preferably 10 mol.-%.

2. Linear ammonium polyphosphates of the general formula $(NH_4PO_3)_{10\text{-}1,000}$, characterized by

a) the solubility of a 10 weight-% suspension in pure water at 25 °C of less than 0.8 g per 100 g suspension ;

b) the viscosity of a 10 weight-% suspension in pure water at 25 °C of at most 100 mPa · s ;

c) the viscosity of a 30 weight-% suspension in a polyesterpolyol at 25 °C of at most 50 Pa. · s ; and

d) the fact that they are obtainable in accordance with claim 1.

## Revendications

1. Procédé de préparation de polyphosphates d'ammonium linéaires essentiellement insolubles dans l'eau et répondant à la formule générale $(NH_4PO_3)_{10\text{-}1\,000}$ par chauffage avec agitation en continu d'anhydride phosphorique et d'orthophosphate d'ammonium dans un rapport molaire de 1 : 0,9 à 1 : 1,1 en présence d'ammoniac et ensuite recuit du produit de réaction pendant plusieurs heures à 200-400 °C en présence d'ammoniac, caractérisé en ce que l'on soumet l'anhydride phosphorique et l'orthophosphate d'ammonium à 50-150 °C aux opérations successives suivantes :

a) réaction avec l'ammoniac pendant 5-15 min sous une surpression de 1-2 mbar ;

b) mélange pendant 10-60 min sans apport d'ammoniac à la pression atmosphérique et sous azote ;

c) réaction avec l'ammoniac pendant 1-3 h sous une pression inférieure de 1-5 mbar à la pression atmosphérique, et on recuit le produit de réaction, l'ammoniac étant utilisé au total en excès stœchiométrique d'au plus 30 mol.-%, de préférence au plus 10 mol.-%.

2. Polyphosphates d'ammonium linéaires répondant à la formule générale $(NH_4PO_3)_{10\text{-}1\,000}$, caractérisés par

a) la solubilité d'une suspension à 10 % en poids dans l'eau pure à 25 °C de moins de 0,8 g par 100 g de suspension ;

b) la viscosité d'une suspension à 10 % en poids dans l'eau pure à 25 °C d'au plus 100 mPa · s ;
c) la viscosité d'une suspension à 30 % en poids dans un polyester-polyol à 25 °C d'au plus 50 Pa · s ; et
d) l'aptitude d'être préparés selon la revendication 1.